# EUROPÄISCHE PATENTSCHRIFT

(11) **EP 0 811 542 B1**
(45) Veröffentlichungstag und Bekanntmachung des Hinweises auf die Patenterteilung: **09.07.2003**
(21) Anmeldenummer: 97107893.6
(22) Anmeldetag: 15.05.1997
(51) Int. Cl.: B62B 3/10, B60J 7/16

(54) **Aufnahmevorrichtung für ein Hardtop**
Holder for a hardtop
Dispositif de réception pour toit amovible

(30) Priorität: 05.06.1996 DE 19622508; 20.12.1996 DE 19653407
(43) Veröffentlichungstag der Anmeldung: 10.12.1997
(73) Patentinhaber: Dr.Ing.h.c. F. Porsche Aktiengesellschaft, 70435 Stuttgart (DE)
(72) Erfinder: Piller, Anton, 71254 Ditzingen (DE); Hübert, Klaus, 71711 Steinheim (DE); Reuter, Dieter, 71139 Ehningen (DE)

(56) Entgegenhaltungen:
- GB-A- 2 223 460
- US-A- 4 326 726
- US-A- 5 253 887
- US-A- 5 445 279

## Beschreibung

Die Erfindung bezieht sich auf eine Aufnahmevorrichtung für ein Hardtop nach dem Oberbegriff des Anspruchs 1.

Aus dem DE-GM 89 14 095 ist ein zusammenlegbarer Rollständer zum Ablegen und Abtransportieren von abmontierten festen Dächern von Cabrio-Fahrzeugen bekannt. Desweiteren ist aus der DE 44 07-170 A1 eine Vorrichtung zum Aufnehmen und Absetzen für ein Hardtop bekannt, wobei dieses über Haltelaschen in einem Gestell aufgehängt gelagert ist. Bei der Lagerung stützt sich das Hardtop mit seinen beiden querverlaufenden Dachrändern einerseits am Fahrgestell und andererseits an einer aufragenden Tragsäule ab.

US-A-4 326 726 zeigt eine Aufnahme vorrichtung für ein Hardtop gemäß Oberbegriff des Anspruchs 1.

Der Erfindung liegt die Aufgabe zugrunde, eine Aufnahmevorrichtung für ein Hardtop eines Kraftfahrzeuges zu schaffen, die eine sichere Lagerung bei einfacher Transportierbarkeit gewährleistet. Desweiteren soll eine Aufnahmevorrichtung für ein Hardtop geschaffen werden, die neben einer Lagerung für das Hardtop weitere Verwendungsmöglichkeiten der Aufnahmevorrichtung ermöglicht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Hardtop in einer Aufnahmevorrichtung gehalten wird, die einerseits als Rollgestell ausgebildet ist und die andererseits auch aus dem Rollgestell als separate Tragvorrichtung herauslösbar ist und dann an eine Wand bzw. an eine Garagenwand schraubbar ist. Durch die Vorrichtung wird zudem die Möglichkeit geschaffen, das Hardtop in einfacher Weise auf die Vorrichtung abzusetzen, zu transportieren und wieder abzunehmen.

Die Aufnahmevorrichtung weist im wesentlichen ein Gestell mit zwei Querstangen auf, in denen korrespondierend zu den Verschlüssen und Einsteckzungen des Hardtops entsprechende Lageraufnahmen vorgesehen sind. Diese sind vorzugsweise so ausgebildet, daß in Lageraufnahmen einer untenliegenden Querstange des Gestells die am vorderen Rand des Hardtops angeordneten Einsteckzungen hineinragen und in Lageraufnahmen einer obenliegenden Querstange des Gestells die Verriegelungsverschlüsse im mittleren Bereich des Hardtops einrasten. Diese Verschlüsse dienen am Fahrzeug zur Festsetzung und Verriegelung am Fahrzeugaufbau. Entsprechend sind diese Verschlüsse auch in den Lagerungen der Querstangen des Gestells einsetz- und verriegelbar. Hierdurch ist das Hardtop sicher im Gestell gehalten, so daß ein Herunterfallen vom Gestell unterbunden wird.

Das Gestell umfaßt einen Grundrahmen mit Rollen, an dem an jeder Seite zwei dreieckförmig angeordnete Gestellstreben befestigt sind, welche am oberen freien Ende die eine Querstange mit den Lageraufnahmen aufnimmt. Die weitere untenliegende Querstange mit den Lageraufnahmen ist über Lagerböcke im Grundgestell gehalten und kann beim Lösen der oberen Querstange vom Gestell aus den Lagerböcken herausgehoben werden und somit ais separates Gestell zum Befestigen an einer Wand verwendet werden, um das Hardtop stationär aufzunehmen.

Im Grundgestell wird darüber hinaus eine Gestellstrebe mit einer zusätzlichen Gestellstrebe so kombiniert, daß sich eine Lagerungsvorrichtung für Fahrzeugräder ergibt, in denen diese vertikal nebeneinander gelagert werden können.

Desweiteren werden nach einer weiteren Ausführung mit der Erfindung hauptsächlich der Vorteil erzielt, daß die Tragvorrichtung für das Hardtop im Gestell in mindestens eine weitere Position verschwenkbar ist. Diese Positionen, wie beispielsweise Arbeitspositionen und Aufnahmepositionen, werden durch ein Stützrohr erzielt, das sich in einem Träger des Gestells abstützen kann. Das Stützrohr is zu diesem Zweck verschieden lang ausgeführt, wobei in der Arbeitsposition ein langes Stützrohr und in der Aufnahmeposition für das Hardtop ein kürzeres Stützrohr verwendet wird.

In vorteilhafter Weise wird das Stützrohr im Kreuzungspunkt einer Querstange der Tragvorrichtung in einer Aufnahmehülse lösbar eingesteckt gehalten, so daß ein Austausch gegen eine Stützstrebe anderer Längen in einfacher Weise möglich ist. Das der Aufnahmehülse abgekehrte freie Ende des Stützrohres ist in einem Träger abgestützt, der als Winkelprofil oder dgl. Profil ausgebildet ist.

Ausführungsbeispiele der Erfindung sind in den Zeichnungen dargestellt und werden im folgenden näher beschrieben.

Es zeigen
- Fig. 1: eine schaubildliche Darstellung einer Aufnahmevorrichtung für ein Hardtop,
- Fig. 2: eine schaubildliche Darstellung der Aufnahmevorrichtung zur Verwendung an einer Wand.
- Fig. 3: eine vergrößerte Darstellung einer Lageraufnahme an einer unteren Querstrebe,
- Fig. 4: eine vergrößerte Darstellung einer Lagerung an einer oberen Querstrebe,
- Fig. 5: die Aufnahmevorrichtung mit gelagertem Hardtop,
- Fig. 6: einen Schnitt nach der Linie VI-VI der Fig. 4,
- Fig. 7: einen Verschluß des Hardtops im mittleren Bereich,
- Fig. 8: eine Einsteckzunge des Hardtops am vorderen Rand,
- Fig. 9: eine weitere Ausführung einer Tragvorrichtung mit einer Stützstrebe und
- Fig. 10: eine Ansicht auf die Vorrichtung mit angesetzter Stützstrebe.

Eine Aufnahmevorrichtung 1 für ein Hardtop 2 umfaßt im wesentlichen einen Grundrahmen 3a mit einem Gestell 3, wobei am Grundrahmen 3a Rollen 4 vorgesehen sind. Der Grundrahmen 3a weist Seitenträger 5, 6 auf, an denen dreieckförmig aufgestellte Streben 7, 8 befestigt sind, die am freien Ende 9 mit einer oberen Querstange 10 eines Hardtopträgers 11 verbunden sind. Eine untere Querstange 12 des Trägers 11 ist im Grundgestell 3a über Lagerböcke 13, 14 abgestützt, die mit einem Längsträger 15 des Grundgestells 3a und mit einem zusätzlichen beabstandeten Längsträger 16 verbunden sind. Beide Querstangen 10, 12 sind über eine aufrechte Stange 17 miteinander verbunden, so daß sich ein H-förmiger Träger 11 ergibt.

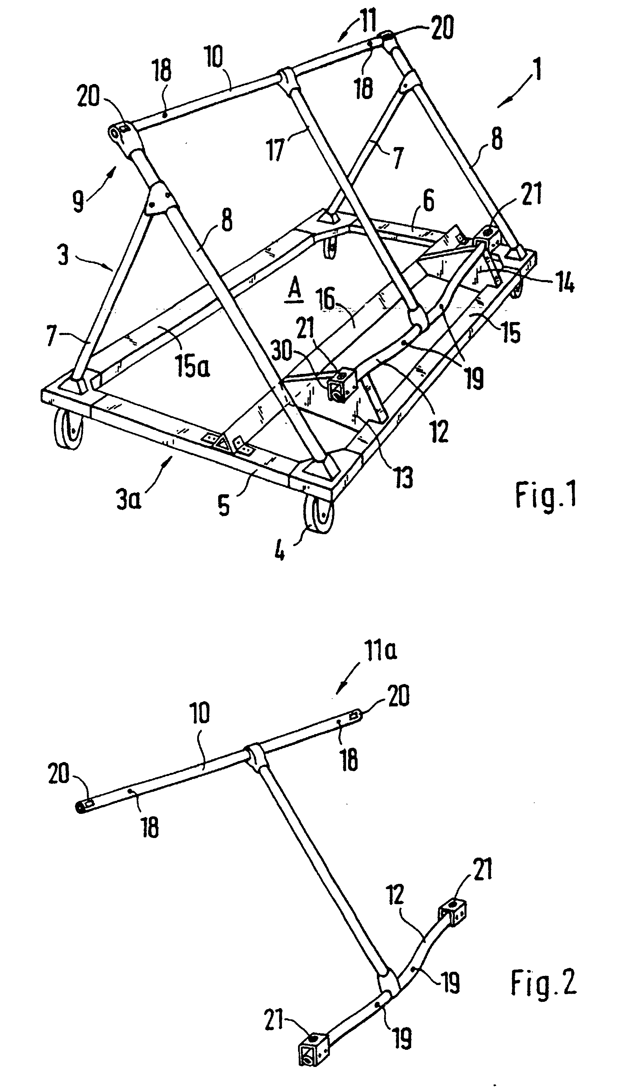

Die obere Querstange 10 ist mit der Strebe 8 lösbar verbunden und die untere Querstange 12 ist in den Lagerböcken 13, 14 in nach oben hin offenen Aufnahmen 13a gehalten. Der Träger 11 ist somit aus dem Gestell 3 der Aufnahmevorrichtung 1 heraushebbar, wie Fig. 2 näher zeigt und bildet einen separaten Träger 11a. Eine Befestigung an einer Wand, beispielsweise an einer Garagenwand erfolgt über Halteschrauben, welche Bohrungen 18, 19 in den Querstangen 10, 12 durchdringen. Die Querstangen 10, 12 sind im Gestell 3 der Aufnahmevorrichtung 1 so angeordnet, daß das Hardtop 2 etwa senkrecht stehend in Lageaufnahmen 20, 21 der Querstangen 10, 12 aufgenommen wird.

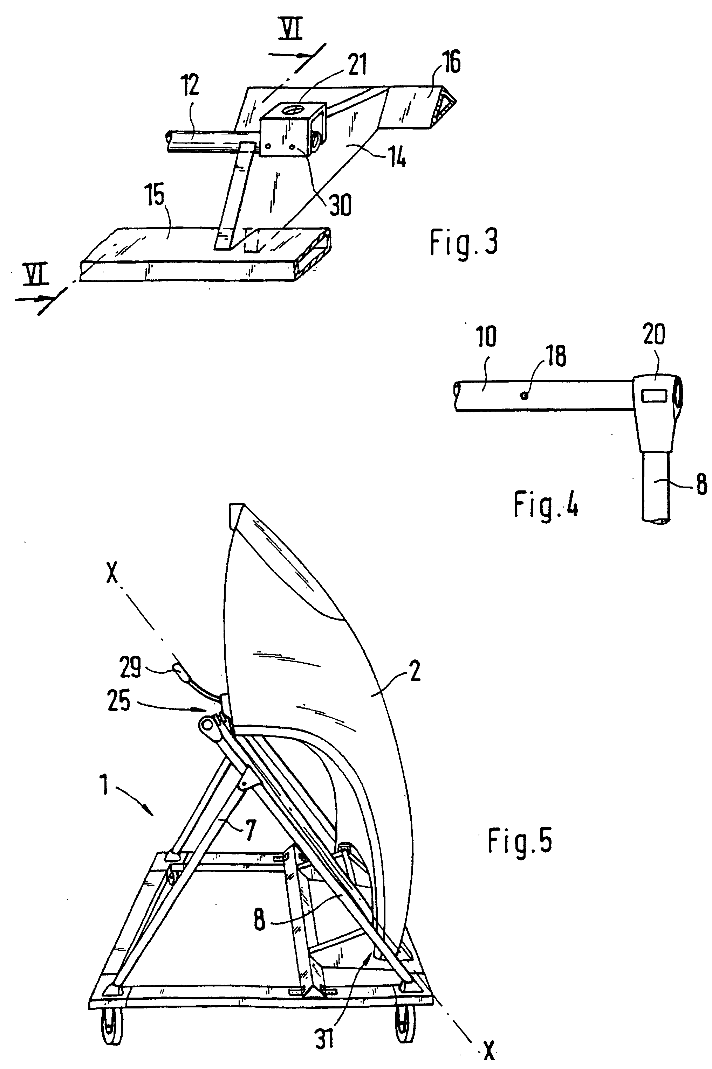

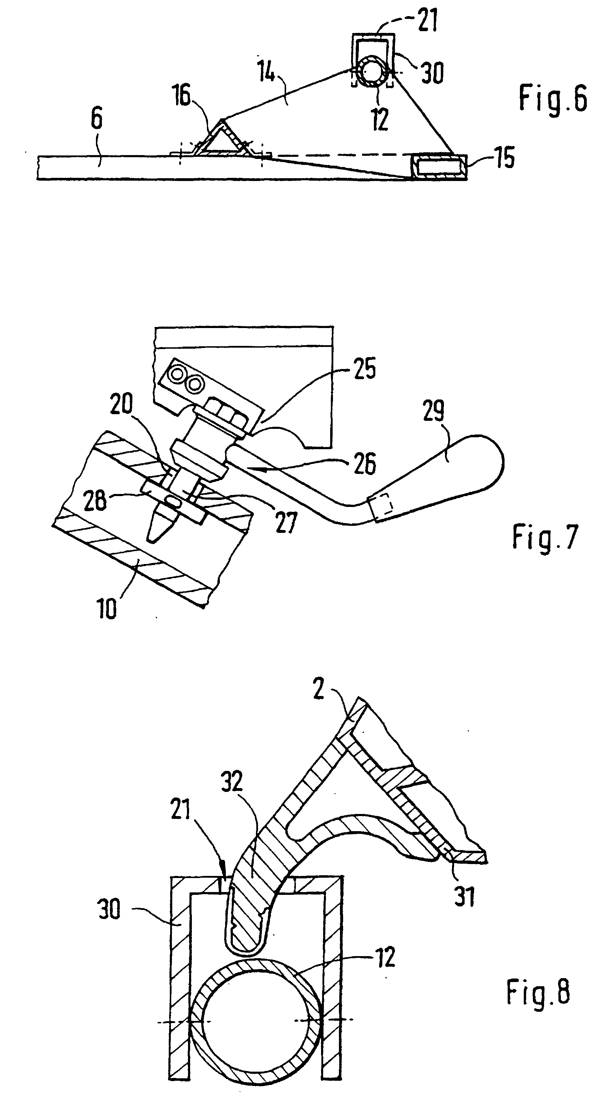

Wie in Fig. 5 in Verbindung mit Fig. 7 näher gezeigt, weist das Hardtop 2 im mittleren Dachbereich 25 zwei Verriegelungsverschlüsse 26 auf, die aus Rastzapfen 27 mit einem querstehenden Bolzen 28 bestehen. Der Rastzapfen 27 wird in die Lageraufnahmen 20 der oberen Querstange 10 eingeführt und zur Verrastung wird der Zapfen 27 über die Handhabe 29 verdreht, so daß der Bolzen 28 die dargestellte Verriegelungsposition in der Lageaufnahme 20 einnimmt.

in Fig. 8 ist die untere Querstange 12 mit der Lageraufnahme 21 in einem Halteelement 30 gezeigt, wobei das Halteelement 30 mit der unteren Querstange 12 verbunden ist. Am vorderen Rand 31 des Hardtops 2 sind Einsteckzungen 32 angeordnet, die in Lageraufnahmen 21 des Halteelements 30 in der Querstange 12 einhaken und das Hardtop 2 in Lage halten; wie Fig. 5 näher zeigt.

Die Aufnahmevorrichtung 1 bildet im Grundgestell 3a zwischen einem Längsträger 15a und dem zusätzlichen Längsträger 16 eine Aufnahme A für Fahrzeugräder, die sich mit ihren Laufflächen auf diesen beiden Trägern abstützen.

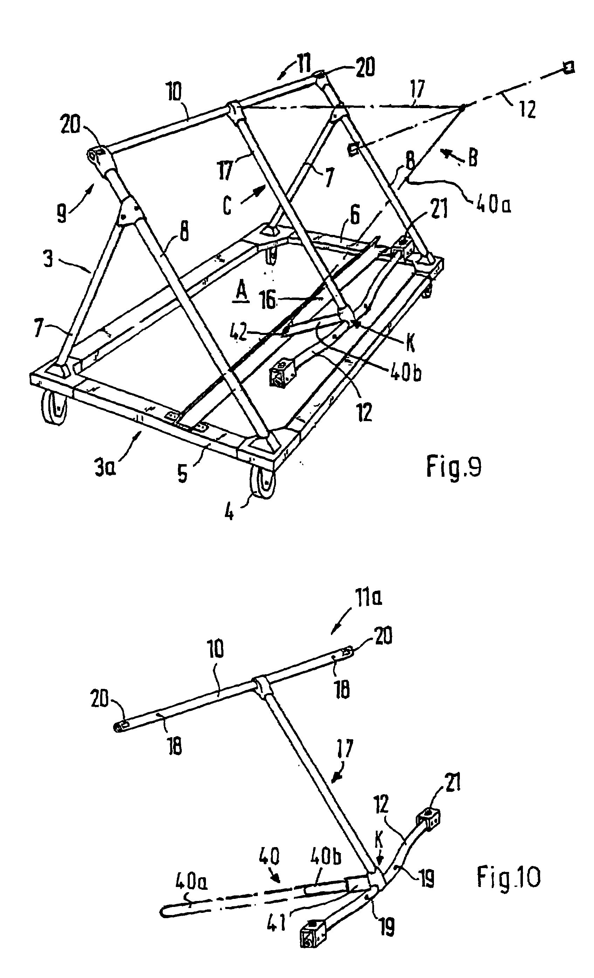

Nach der weiteren Ausführung gemäß der Figuren 9 und 10 weist die Aufnahmevorrichtung 1 für ein Hardtop (nicht dargestellt) den Grundrahmen 3a mit dem Gestell 3 auf, wobei am Grundrahmen 3a die Rollen 4 vorgesehen sind. Dieser Grundranmen weist die Seitenträger 5, 6 auf, an denen die dreieckförmig aufgestellten Streben 7, 8 befestigt sind, die am freien Ende 9 mit einer der Querstange 10 eines Hardtopträgers 11 verbunden sind. Die untere Querstange 12 des Träger 11 ist im Grundgestell 3a über ein Stützrohr 40 abgestützt. Beide Querstangen 10, 12 sind über die aufrechte Stange 17 miteinander verbunden, so daß sich der H-förmige Träger 11 ergibt.

Die obere Querstange 10 ist mit der Strebe 8 lösbar verbunden und schwenkbar ausgeführt. Der Träger 11 ist somit aus dem Gestell 3 der Aufnahmevorrichtung 1 heraushebbar, wie Fig. 2 näher zeigt und bildet einen separaten Träger 11a. Eine Befestigung an einer Wand, beispielsweise an einer Garagenwand, erfolgt über Halteschrauben, welche Bohrungen 18, 19 in den Querstangen 10,12 durchdringen. Die Querstangen 10,12 sind im Gestell 3 der Aufnahmevorrichtung 1 so angeordnet, daß das Hardtop 2 etwa senkrecht stehend in Lageraufnahmen 20, 21 der Querstangen 10, 12, aufgenommen wird. Hierzu ist das Stützrohr 40b von relativ kurzer Länge.

Im Knotenpunkt K ist die Stange 17 mit der Querstange 12 verbunden und das Stützrohr 40 ist in einer Aufnahmehülse 41 des Knotenpunktes K eingesteckt angeordnet. Das Rohr 40 stützt den Träger 11a in einem Längsträger 16 ab, das beispielsweise aus einem Winkelprofil besteht, in dem das freie Ende 42 des Stützrohres gehalten wird.

Wie in Fig. 9 näher dargestellt, ist die Aufnahmeposition C für das Hardtop in ausgezogenen Linien und die horizontale Arbeitsposition B in strichpunktierten Linien dargestellt. In dieser Position B stützt sich der Träger 11a über ein langes Stützrohr 40a am Längsträger 16 ab, wobei das kürzere Stützrohr 40b die Aufnahmeposition C kennzeichnet.

Die Stützrohre 40a und 40b sind in einfacher Weise gegeneinander auswechselbar, indem sie aus der Aufnahmehülse 41 herausgezogen werden. Die Lageveränderung des Trägers 11a gibt dem Benutzer die Möglichkeit, entweder das Hardtop zur Bearbeitung, beispielsweise zum Reinigen und zur Wartung und dgl. Arbeiten in eine horizontale Lage zu verschwenken. Des weiteren besteht auch die Möglichkeit, bei abgenommenem Hardtop den Träger 11a bei horizontaler Anordnung als Tisch zu benutzen, wobei eine Platte oder dgl. auf den Träger auflegbar ist.

## Patentansprüche

1. Aufnahmevorrichtung für ein festes Dach, insbesondere ein Hardtop eines Kraftfahrzeugs, auf einem verfahrbaren Gestell, **dadurch gekennzeichnet, daß** das verfahrbare Gestell (3) eine aus Streben gebildete Tragvorrichtung (11) mit mindestens vier Lageraufnahmen (20, 21) für das Hardtop (2) aufweist und diese Lageraufnahmen korrespondierend zu Verschlüssen (26) und Einsteckzungen (32) des Hardtops angeordnet sind, wobei die Tragvorrichtung (11) mit den Lageraufnahmen (20, 21) vom Gestell (3) trennbar ausgebildet ist und eine separate, örtlich befestigbare Tragvorrichtung (11a) bildet.

2. Aufnahmevorrichtung nach Anspruch 1, **dadurch gekennzeichnet, daß** die Tragvorrichtung (11) zwei über eine Stange (17) verbundene Querstangen (10, 12) aufweist, in denen jeweils die Lageraufnahmen (20, 21) für das Hardtop (2) angeordnet sind.

3. Aufnahmevorrichtung nach den Ansprüchen 1 oder 2, **dadurch gekennzeichnet, daß** die Lageraufnahmen (20, 21) als Ausnehmungen in den Querstangen (10, 12) ausgebildet und in denen Verschlüsse (26) und Einsteckzungen (32) des Hardtops (2) hineinragend gehalten sind, wobei jeweils zwei Verriegelungsverschlüsse (26) in einem mittleren Bereich (25) und Einsteckzungen (32) in einem vorderen Bereich (31) des Hardtops (2) vorgesehen sind.

4. Aufnahmevorrichtung nach den Ansprüchen 1, 2 oder 3, **dadurch gekennzeichnet, daß** die erste obenliegende Querstange (10) mit seitlichen Gestellstreben (7, 8) verbunden sind und die zweite untenliegende Querstange (12) über Lagerböcke (13, 14) im Grundrahmen (3a) des Gestells (3) abgestützt sind.

5. Aufnahmevorrichtung nach einem oder mehreren der vorhergehenden Ansprüche, **dadurch gekennzeichnet, daß** die Lagerböcke (13, 14) mit nach oben hin offenen Aufnahmen (13a) für die zweite herausnehmbare untenliegende Querstange (12) ausgebildet sind.

6. Aufnahmevorrichtung nach einem oder mehreren der vorhergehenden Ansprüche, **dadurch gekennzeichnet, daß** die beiden Querstangen (10, 12) in einer Schrägebene (X-X) des Gestells (3) derart angeordnet sind, daß das Hardtop (2) in einer etwa vertikalen Lagerposition angeordnet ist und im vorderen Bereich (31) des Hardtops (2) die Zungen (32) in Lageraufnahmen (21) der unteren Querstange (12) aufgenommen sind und im mittleren Bereich (25) die Verriegelungsverschlüsse (26) des Hardtops (2) in den Lageraufnahmen (20) der oberen Querstange (10) verrastbar gehalten sind.

7. Aufnahmevorrichtung nach einem oder mehreren der vorhergehenden Ansprüche, **dadurch gekennzeichnet, daß** das Grundgestell (3a) eine im parallelen Abstand zu einem äußeren Längsträger (15a) angeordneten inneren Längsträger (16) aufweist und der Längsträger (15a) mit dem Längsträger (16) eine Aufnahmevorrichtung (A) für senkrecht nebeneinanderstehende Fahrzeugräder bildet.

8. Aufnahmevorrichtung nach Anspruch 1, **dadurch gekennzeichnet, daß** die Tragvorrichtung (11a) schwenkbar in den Lageraufnahmen (20, 21) der Vorrichtung (11) in eine abgesenkte Aufnahmeposition (C) und in eine horizontale Arbeitsposition (B) verschwenkbar ist und in diesen Positionen (C und B) über jeweils ein Stützrohr (40a bzw. 40b) gehalten wird.

9. Vorrichtung nach Anspruch 8, **dadurch gekennzeichnet, daß** das Stützrohr (40a, 40b) im Kreuzungspunkt (K) der Stangen (12, 17) des Trägers (11a) lösbar in einer Aufnahmehülse (41) gehalten ist.

10. Vorrichtung nach den Ansprüchen 8 oder 9, **dadurch gekennzeichnet, daß** das Stützrohr (40b) für die Aufnahmeposition (C) kürzer ausgeführt ist als das Stützrohr (40a) für die Arbeitsposition (B).

11. Vorrichtung nach den Ansprüchen 8, 9 oder 10, **dadurch gekennzeichnet, daß** das Stützrohr (40a, 40b) sich mit seinem der Aufnahmehülse (41) abgekehrten freien Ende (42) an einem Längsträger (16) abstützt.

## Claims

1. A holding device for a hardtop, in particular a hardtop of a motor vehicle, on a movable stand, **characterized in that** the movable stand (3) comprises a support device (11) formed from braces and with at least four bearing receiving means (20, 21) for the hard-top (2), and the said bearing receiving means are arranged so as to correspond to closures (26) and insertion tongues (32) of the hardtop, wherein the support device (11) with the bearing receiving means (20, 21) is made separable from the stand (3) and forms a separate support device (11a) which can be fastened locally.

2. A holding device according to Claim 1, **characterized in that** the support device (11) comprises two transverse bars (10, 12) which are connected by way of a bar (17) and in which the bearing receiving means (20, 21) for the hardtop (2) are arranged in each case.

3. A holding device according to Claim 1 or 2, **characterized in that** the bearing receiving means (20, 21) are constructed in the form of recesses in the transverse bars (10, 12) and in which closures (26) and insertion tongues (32) of the hardtop (2) are held in a projecting manner, wherein two respective locking closures (26) are provided in a middle region (25) and insertion tongues (32) are provided in a front region (31) of the hardtop (2).

4. A holding device according to Claim 1, 2 or 3, **characterized in that** the first transverse bar (10) situated above is connected to lateral stand braces (7, 8) and the second transverse bar (12) situated below is supported in the base frame (3a) of the stand (3) by way of bearing stands (13, 14).

5. A holding device according to one or more of the preceding Claims, **characterized in that** the bearing stands (13, 14) are constructed with receiving means (13a) open at the top for the second withdrawable transverse bar (12) situated below.

6. A holding device according to one or more of the preceding Claims, **characterized in that** the two transverse bars (10, 12) are arranged in an oblique plane (X-X) of the stand (3) in such a way that the hardtop (2) is arranged in a substantially vertical mounting position, and in the front region (31) of the hardtop (2) the tongues (32) are received in bearing receiving means (21) of the lower transverse bar (12) and in the middle region (25) the locking closures (26) of the hardtop (2) are held in the bearing receiving means (20) of the upper transverse rod (10) in a catching manner.

7. A holding device according to one or more of the preceding Claims, **characterized in that** the base stand (3a) has an inner longitudinal support (16) arranged at a parallel distance from an outer longitudinal support (15a) and the longitudinal support (15a) together with the longitudinal support (16) forms a receiving device (**A**) for vehicle wheels arranged vertically adjacent to one another.

8. A holding device according to Claim 1, **characterized in that** the support device (1 1a) is pivotable into a recessed receiving position (C) and into a horizontal operating position (**B**) in the bearing receiving means (20, 21) of the device (11) in a pivotable manner and is held in the said positions (**C** and **B**) by way of a support tube (40a and 40b respectively) in each case.

9. A device according to Claim 8, **characterized in that** the support tube (40a, 40b) is held in a releasable manner in a receiving sleeve (41) at the point of intersection (**K**) of the bars (12, 17) ofthe support (1la).

10. A device according to Claim 8 or 9, **characterized in that** the support tube (40b) for the receiving position (**C**) is shorter than the support tube (40a) for the operating position (**B**).

11. A device according to Claim 8, 9 or 10, **characterized in that** the support tube (40a, 40b) is supported at its free end (42) remote from the receiving sleeve (41) on a longitudinal support (16).

## Revendications

1. Dispositif de réception pour un toit fixe, en particulier un toît amovible d'un véhicule automobile, sur un bâti déplaçable, **caractérisé en ce que** le bâti (3) déplaçable comporte un dispositif porteur (11) formé par des entretoises avec au moins quatre logements de support (20, 21) pour le toît amovible (2), et ces logements de support sont disposés de manière à correspondre à des fermetures (26) et des languettes à enficher (32) du toît amovible, le dispositif porteur (11) avec les logements de support (20, 21) étant réalisé de manière à pouvoir être séparé du bâti (3), et forme un dispositif porteur (11a) séparé, pouvant être fixé localement.

2. Dispositif de réception selon la revendication 1, **caractérisé en ce que** le dispositif porteur (11) comporte deux barres transversales (10, 12) dans chacune desquelles sont disposés les logements de support (20, 21) pour le toît amovible (2).

3. Dispositif de réception selon les revendications 1 ou 2, **caractérisé en ce que** les logements de support (20, 21) sont réalisés en tant qu'évidements dans les barres transversales (10, 12) et à l'intérieur de ceux-ci sont maintenues des fermetures (26) et languettes à enficher (32) du toît amovible (2), deux fermetures de verrouillage (26) étant prévues dans une zone centrale (25) et des languettes à enficher (32) dans une zone avant (31) du hard-top (2).

4. Dispositif de réception selon les revendications 1, 2 ou 3, **caractérisé en ce que** la première barre transversale (10) située à la partie supérieure est reliée à des entretoises (7, 8) latérales du bâti et la deuxième barre transversale (12) située à la partie inférieure prend appui, par l'intermédiaire de supports (13, 14), dans le cadre de base (3a) du bâti (3).

5. Dispositif de réception selon une ou plusieurs des revendications précédentes, **caractérisé en ce que** les supports (13, 14) comportent des logements (13a) ouverts vers le haut, pour la deuxième barre transversale (12) amovible située à la partie inférieure.

6. Dispositif de réception selon une ou plusieurs des revendications précédentes, **caractérisé en ce que** les deux barres transversales (10, 12) sont disposées dans un plan oblique (X-X) du bâti (3) de manière que le toît amovible (2) soit disposé dans une position de support approximativement verticale, et que dans la zone avant (31) du toît amovible (2), les languettes (32) soient reçues dans des logements de support (21) de la barre transversale (12), et que dans la zone centrale (25), les fermetures de verrouillage (26) du toît amovible (2) soient maintenues par accrochage dans les logements de support (20) de la barre transversale supérieure (10).

7. Dispositif de réception selon une ou plusieurs des revendications précédentes, **caractérisé en ce que** le bâti de base (3a) comporte un longeron intérieur (16) disposé parallèlement à un longeron extérieur (15a) et à distance de celui-ci, et le longeron (15a) forme avec le longeron (16) un dispositif de réception (A) pour des roues du véhicule disposées verticalement côte à côte.

8. Dispositif de réception selon la revendication 1, **caractérisé en ce que** le dispositif porteur (11a) est maintenu pivotant dans les logements de support (20, 21) du dispositif (11) dans une position de réception (C) abaissée, et peut pivoter dans une position de travail horizontale (B), et est maintenu dans ces positions (C) et (B) par un tube d'appui respectif (40a ou 40b).

9. Dispositif de réception selon la revendication 8, **caractérisé en ce que** le tube d'appui (40a, 40b) est maintenu séparable dans une douille de réception (41), au point de croisement (K) des barres (12, 17) du support (11a).

10. Dispositif de réception selon les revendications 8 ou 9, **caractérisé en ce que** le tube d'appui (40b) pour la position de réception (C) est plus court que le tube d'appui (40a) pour la position de travail (B).

11. Dispositif de réception selon les revendications 8, 9 ou 10, **caractérisé en ce que** le tube d'appui (40a, 40b) prend appui contre un longeron (16), par son extrémité libre (42) tournée à l'opposé de la douille de réception (41).
